# FASCICULE DE BREVET EUROPEEN

(11) **EP 0 936 486 B1**
(45) Date de publication et mention de la délivrance du brevet: **15.11.2006**
(21) Numéro de dépôt: 99400301.0
(22) Date de dépôt: 09.02.1999
(51) Int. Cl.: G02B 6/44

(54) **Boîtier de piquage d'un câble notamment de fibres optiques**
Verbindungsdose für ein Kabel, insbesondere für ein faseroptisches Kabel
Connection box for a cable, particularly a fibre optical cable

(30) Priorité: 10.02.1998 FR 9801558
(43) Date de publication de la demande: 18.08.1999
(73) Titulaire: FRANCE TELECOM, 75015 Paris (FR)
(72) Inventeur: Crespel, Daniel, 94230 Cachan (FR)
(74) Mandataire: Bentz, Jean-Paul

(56) Documents cités:
- EP-A- 0 428 931
- EP-A- 0 803 753
- FR-A- 2 528 220
- FR-A- 2 745 393
- FR-A- 2 750 220
- US-A- 5 071 220
- US-A- 5 684 911

## Description

L'invention concerne un boîtier de piquage d'un câble tendu notamment de fibres optiques.

L'invention s'applique au piquage en ligne ou en section opéré sur des câbles.

D'une manière générale, le piquage est une opération consistant à dériver un ou plusieurs fils ou une ou plusieurs fibres d'un câble pour les connecter à un autre câble.

La technique de piquage est une technique relativement récente pour les câbles à fibres optiques qui consiste à venir interrompre la ou les fibres optiques à dériver pour la ou les raccorder à d'autres fibres d'un autre câble.

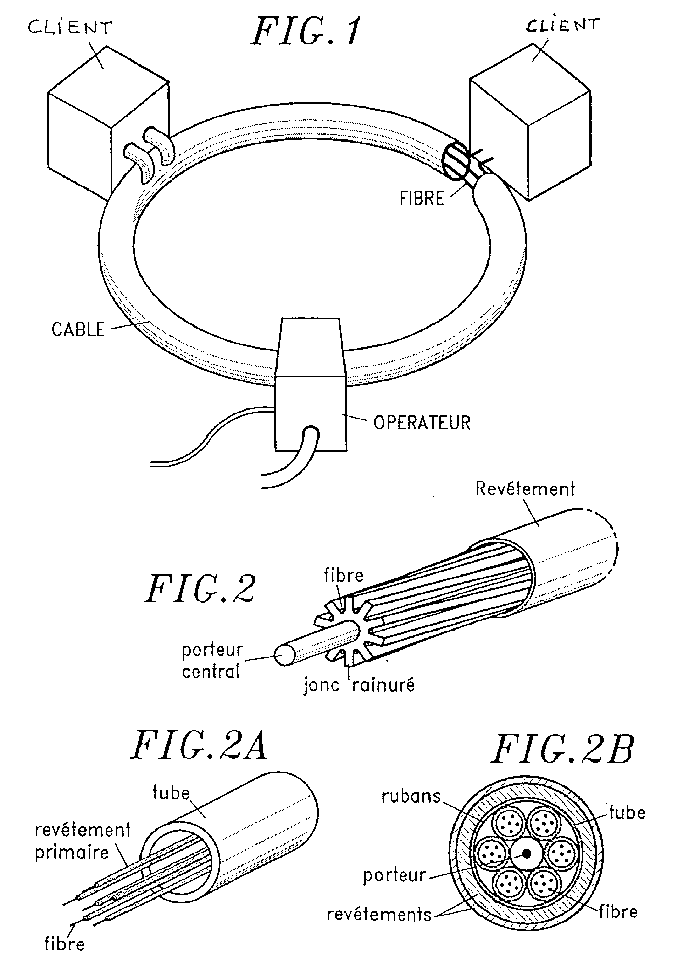

Cette technique a été développée par le déposant avec le développement des Réseaux Optiques Flexibles (ROF). On pourra se reporter au schéma de la figure 1 qui illustre le principe du piquage sur un tel réseau.

Afin de mieux comprendre l'invention, on rappelle tout d'abord l'évolution de structure des câbles optiques actuellement disponibles.

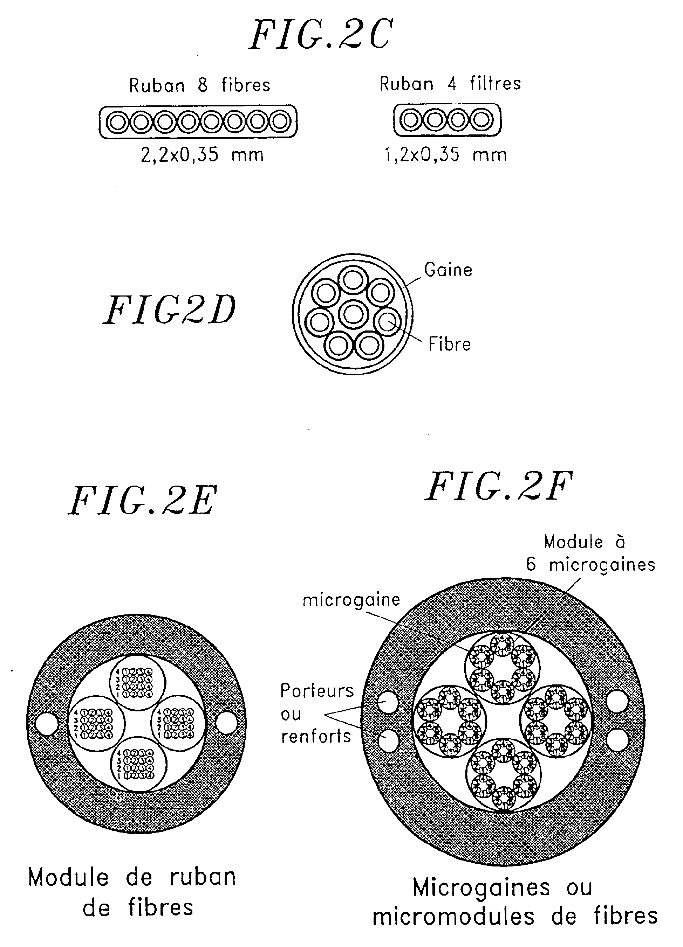

Les premiers câbles spécialement conçus pour la réalisation de réseaux interurbains sont des câbles à joncs rainurés dont une illustration est donnée sur la figure 2.

Afin de mieux protéger la fibre, mais aussi afin de la conditionner, la technique du câble à tubes a ensuite été développée.

Ces tubes remplacent les rainures pour protéger plus efficacement les fibres.

Leur processus de fabrication est plus avantageux et moins coûteux que celui des câbles rainurés. Une illustration de ces câbles est donnée aux figures 2A et 2B.

Ces câbles ont été utilisés pour la réalisation de liaisons inter-centraux. Les câbles étaient raccordés aux deux bouts et le plus souvent utilisés sur de grandes distances (raccordements de ville à ville, création de réseaux dits nationaux).

Puis, une approche de la distribution a été envisagée pour la réalisation de réseaux en zone urbaine (ROF : réseaux optiques flexibles).

Ces réseaux en boucles, donc sécurisés par un retour sur un parcours différent, permettent une fiabilité plus grande. Ils ont été utilisés pour le raccordement des grands comptes (banques par exemple).

Le raccordement de clientèle d'affaires s'est développé très récemment, le plus souvent dans les zones urbaines, avec l'utilisation de la technique de piquage.

C'est effectivement à cette occasion que le Déposant a été amené à développer la technique du piquage.

En outre, deux concepts de câbles dits câbles unitubulaires ou de distribution ayant des caractéristiques optiques sensiblement égales aux câbles de réseaux interurbains ont été développés, mais avec une réduction de poids (poids divisé par 2 pour un même diamètre) et une augmentation du nombre de fibres (4 à 5 fois plus de fibres).

Contrairement aux câbles de transport, la structure des câbles unitubulaires se caractérise, dans les câbles jusqu'à 288 fibres, par un tube épais en polyéthylène haute densité dans lequel on a inclus deux ou quatre porteurs. Ces porteurs ont un rôle de stabilité de matériaux. En effet, ils sont en composite de fibre de verre ou de mèche aramide. Leur bonne tenue à la traction, nais aussi à la compression, facilite la pose.

Le conditionnement des fibres formant les câbles unitubulaires aboutit à deux types de modules optiques à savoir: les fibres en ruban et les fibres en enveloppe souple.
- Les fibres en ruban ou fibres en nappe dont une illustration est donnée à la figure 2C, sont conditionnées côte à côte dans une enveloppe polymérisée. Ce conditionnement réalisé en usine, facilite le raccordement de masse.
- Les fibres en enveloppe souple conditionnées en vrac, communément appelées micro-gaines sont illustrées par le schéma de la figure 2D. Ces fibres sont libres dans cette enveloppe colorée. L'association de plusieurs enveloppes est proche de l'état de l'art d'un câble cuivre. Le repérage par des couleurs permet d'identifier un module en extrémité mais aussi en section de câble.

L'introduction du piquage dans le réseau s'est faite avec l'utilisation de boîtiers conçus pour des réseaux nationaux.

Pour se faire deux types de boîtiers ont été répertoriés
A)- les boîtiers en auges ou barquettes
B)- les boîtiers avec embase et couvercle en forme de dôme.

A: Les boîtiers en auges ou barquettes, tel que décrit dans le document brevet US 5,071,220 sont souvent de forme prismatique. Des passages de câbles sont disposés en opposition. Dans la continuité du passage de câble, un amarrage permet de reprendre tous les porteurs du câble. Il y a donc autant d'amarrage que de câbles. Ces câbles peuvent entrer d'un côté ou de l'autre du boîtier par divers tubulures ou passages étanches. Le passage des câbles est dans le plan de joint du boîtier. Il est donc nécessaire de refermer tout le boîtier, d'utiliser le plus souvent des résines pour l'étanchéité. L'accès aux fibres se réalise par le démontage total du boîtier et l'ouverture du plan de joint.

Ce boîtier, conçu pour être utilisé en ligne avec une sur-longueur de câble des deux côtés, est de plus en plus souvent utilisé en épi, c'est-à-dire que les câbles ne rentrent que d'un côté.

B: Les boîtiers avec embase et couvercle en dôme ou coiffe. Ils se caractérisent par une embase de forme circulaire sur laquelle des passages de câbles, de forme ronde ou oblongue, permettent, avec un manchon thermo-rétractable, avec colle, d'assurer l'étanchéité par déformation et collage.

Cette étanchéité nécessite de placer le manchon avant le montage du câble et d'utiliser une source de chaleur, ce qui rend l'opération délicate.

Comme dans les boîtiers précédents, l'amarrage permet de reprendre les efforts sur les porteurs du câble.

Ces boîtiers, de culture anglo-américaine, sont mal adaptés à l'intégration de l'amarrage interne au boîtier.

Afin d'adapter le piquage aux structures plus récentes de câbles, deux autres boîtiers ont été décrits:
C)- Un boîtier qui a fait l'objet d'un dépôt N° FR 96 07887, publié sous le N° 2 750 222, se caractérise par une forme ronde. La sur-longueur de câble est enroulée sur le périmètre, ce qui permet de différer le raccordement en dehors de la chambre de tirage. Ce boîtier est évolutif par assemblage d'une ou plusieurs embases.
   Le boîtier C a comme inconvénient premier de ne pas être industrialisé. Il est conçu pour le piquage sur des câbles souples pour pouvoir être enroulés. La réduction du volume de l'amarrage et l'intégration à l'étanchéité sont intéressantes mais coûteuses. de plus, il est nécessaire d'avoir des cavités d'accueil pour les amarrages.
D)- Un boîtier également en forme de barquette selon la description précédente est composé de deux éléments symétriques. Ce boîtier est intéressant par la réduction du volume, mais aussi par l'utilisation d'étanchéité mécanique qu'il présente. Il s'agit en pratique d' un clone des boîtiers A et présente les mêmes inconvénients. En effet, il assure une continuité mécanique des porteurs par des amarrages de ceux-ci.

Une boîtier D, issu de la conception du boîtier A, a les mêmes inconvénients, en particulier des amarrages encombrants, des structures de lovage non justifiées puisque, dans le cas du piquage, seulement quelques fibres sont à organiser. La structure porteuse du câble est découpée et reconstituée par l'amarrage dans le boîtier, ce qui génère des opérations longues.

La zone de lovage ou d'accès à la fibre ne facilite pas l'ergonomie du raccordement. En effet, dans le cas du piquage, il est souhaitable de disposer d'une longueur d'au moins 80 cm (40 cm de chaque côté).

En résumé, les boîtiers existant reconstituent les éléments mécaniques du câble après les avoir découpés. L' opération d'ancrage génère des dispositifs volumineux et coûteux et entraîne une complexité dans la conception des boîtiers.

Le boîtier selon l'invention permet de remédier à ces inconvénients.

En effet, le boîtier conforme à l'invention permet de reconstituer la protection du câble dans la zone d'intervention avec la suppression des inconvénients des techniques antérieures, en particulier l'intégrité de la gaine du câble est conservée, ce qui élimine d'emblée les amarrages.

Le boîtier selon l'invention permet un accès aux modules optiques facile sans gestion, ni organisation de sur-longueur. En effet, l'invention permet une conservation du module optique en continuité et une hiérarchie limitée des fibres dérivées sans dispositif d'organisation et de gestion.

L'invention peut être utilisée dans des gaines techniques (chemins de câbles verticaux ou horizontaux) compte tenu de la faible section de ce boîtier dont l'axe est confondu avec celui du câble.

Ce boîtier peut être utilisé contrairement aux boîtiers de l'art antérieur, pour la réparation d'un câble de distribution (unitubulaire) en pleine terre après incident par exemple une rupture accidentelle du câble par un engin mécanique.

Les câbles en dérivation introduits axialement dans des étanchéités issues de produits industriels permettent de réduire le coût de ces passages.

Ce boîtier facilite l' accès à la fibre dans toutes les chambres de tirage traversées par un câble de distribution.

Les points d'accès ne nécessitent pas de sur-longueur coûteuse.

Le boîtier permet de faciliter le piquage à priori lors de la création du réseau et à posteriori même si le câble est posé quel que soit le type de chambre de tirage.

Le boîtier est adapté pour des environnements aéro-souterrains (poteaux, pieds d'immeubles, ...) ou en aérien (hauts de poteaux, façades d'immeubles).

L'invention a donc pour objet un système de piquage comme définit dans la revendication 1.

Selon une autre caractéristique, le support creux comporte plusieurs alvéoles successives pour le logement des sur-longueurs des fils ou fibres des câbles de dérivation.

De façon préférentielle l'écarteur est formé de deux tiges parallèles solidaires de rondelles de fixation au boîtier.

Le support creux est formé par une base de forme générale parallélépipédique dans laquelle a été prévu un canal de dimensions appropriées pour recevoir le câble en piquage avec l'écarteur.

Le boîtier comporte une ou plusieurs plaquette support d'épissures placées au-dessus du canal le long de ce dernier.

La base est fermée par un couvercle et un joint placé entre ce couvercle et la base qui assure l'étanchéité du boîtier. Les bords longitudinaux de la base ont une forme ondulée correspondant aux formes des alvéoles de manière à recevoir des clips afin que le couvercle exerce un pression sur ledit joint.

L'invention sera mieux comprise à l'aide de la description qui est faite ci-après et qui est donnée à titre d'exemple non limitatif en regard des dessins qui sont joints sur lesquels :
- la figure 1, représente un schéma de réseau illustrant le piquage pour le raccordement des clients,
- les figures 2, 2A, 2B représentent les différentes structures de câbles antérieures,
- les figures 2E et 2F, représentent les structures de câbles à fibres optiques unitubulaires avec des modules de fibres optiques représentés sur les figures 2C et 2D,
- la figure 3, illustre le boîtier dans son ensemble,

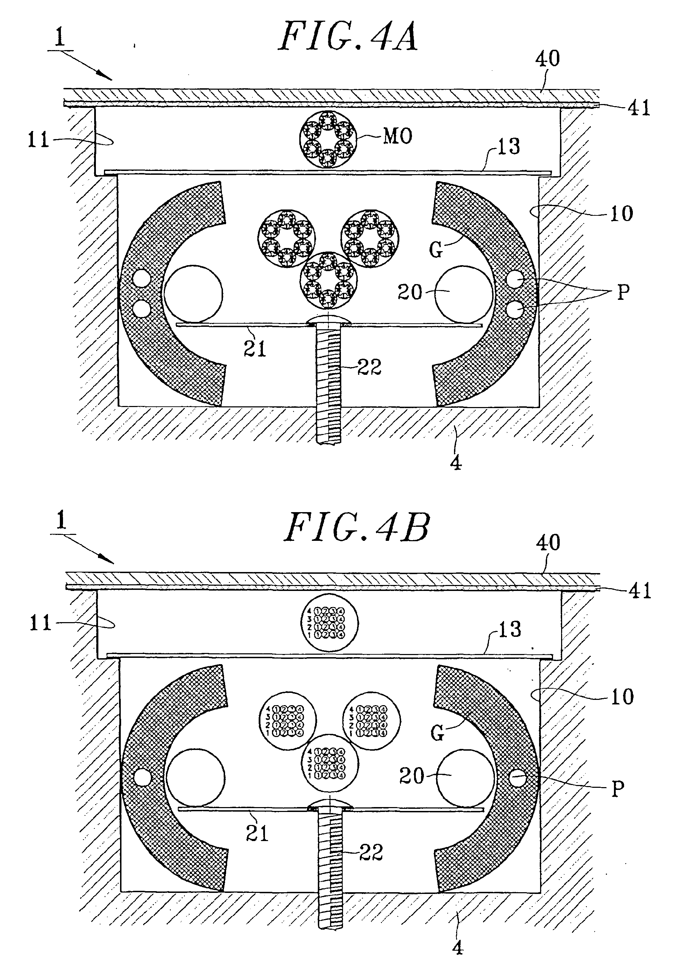

- les figures 4A et 4B, illustrent de façon schématique une coupe transversale du boîtier dans le cas respectivement de modules optiques de type micro-gaine et en nappe ou ruban,
- la figure 5, illustre la base du boîtier selon l'invention et son écarteur.

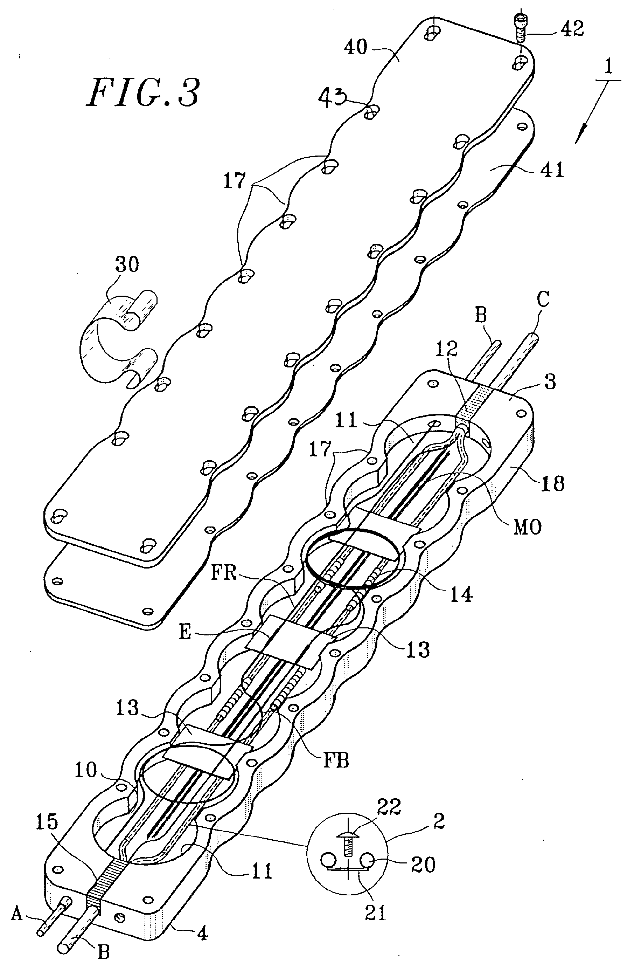

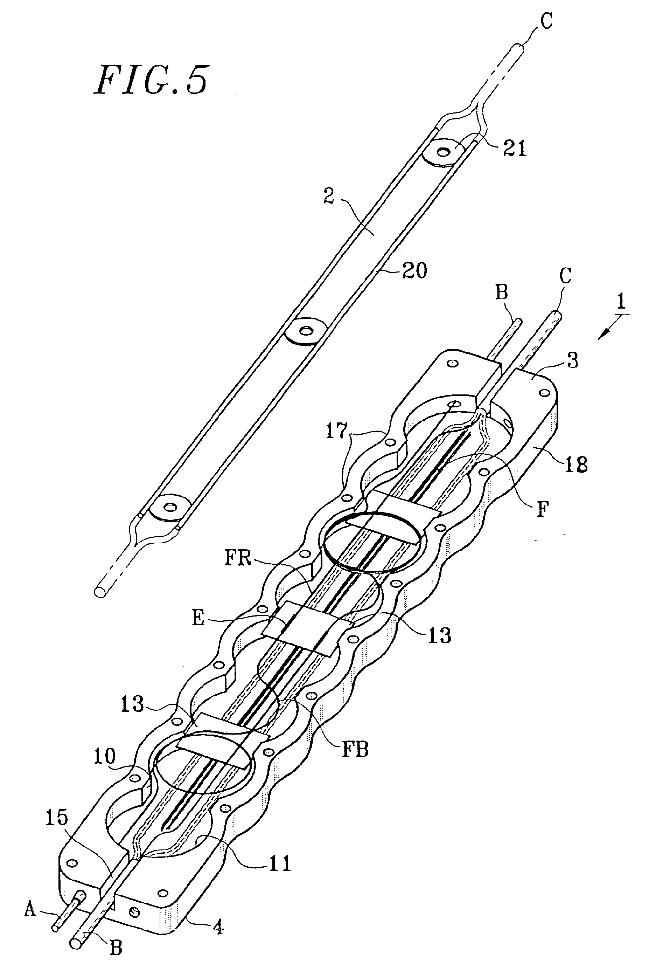

Le boîtier conforme à l'invention est référencé 1 sur les figures 3 et 5 qui le représentent. Ce boîtier a une forme allongée, il est muni d'une base 3 (figure 3 ou 5) et d'un couvercle 40 (figure 3).

La base 3 comporte un ensemble d'alvéoles successives 11 de forme ronde et de dimensions identiques. Celles-ci sont d'un diamètre correspondant à la courbure admissible sur une fibre ou un mini-câble.

Un canal longitudinal 10 traverse diamétralement toutes les alvéoles 11 selon l'axe longitudinal du boîtier. Ce canal 10 se termine aux deux extrémités par une encoche 15 apte à recevoir le câble en piquage avec un mastic d'étanchéité 12.

Ce passage en forme d'encoche 15 est de forme rectangulaire et de section supérieure au câble de 288 fibres (par exemple 15 mm x la profondeur du boîtier). Il peut donc recevoir des câbles de diamètre inférieur par exemple des câbles de 144 fibres avec des diamètres de 10 à 15 mm.

De part et d'autre de ce passage des trous taraudés 16 sont destinés à recevoir des passages de câbles dérivés A, B produits industriels, presse-étoupe ou raccords de mini-tubes.

Ces trous taraudés 16 ont un diamètre normalisé. Dans ces passages le câble est introduit par l'une des extrémités, contrairement au câble en piquage qui est introduit radialement dans son encoche.

Pour assurer l'étanchéité on utilise un mastic polyuréthanne polymérisable à froid, du type des produits utilisés couramment dans l'automobile.

Le câble 1, après préparation de dénudage, est ouvert en deux parties sans destruction des porteurs, ce qui évite la nécessité de toute structure d'amarrage.

L'écarteur 2, représenté de manière plus détaillée sur la figure 5, est composé de deux tubes (ou tiges) 20 soudés sur des rondelles 21 elles-mêmes percées d'un trou. Il permet ainsi de maintenir écartées les deux demi-gaines du câble, ce qui facilite l'accès aux modules de fibres, l'opération de piquage et ce qui permet une manipulation sans risque.

Le perçage des rondelles 21 permet l'introduction de vis 22 pour la fixation au fond du boîtier.

Le câble est donc conditionné dans le boîtier. Des plaquettes 13 permettent un verrouillage du câble et du module optique. Elles ont en plus comme rôle de recevoir les épissures après soudure ou raccordement mécanique. Pour le maintien de ces épissures on utilise un mastic et un assemblage qui peut être dérivé de la description du brevet déposé par le déposant sous le N° FR 96 02410, publié sous le N° 2 745 393 le 29 août 1997..

Les demi-gaines G sont de préférence assemblées à l'écarteur 2 avec des liens 14 afin d'éviter tout préjudice accidentel aux modules optiques.

Une sur-longueur des câbles de dérivation minimum, mais indispensable, est laissée libre dans les alvéoles.

Par soucis de gain de matière, l'extérieur du boîtier suit sensiblement la forme intérieure, ce qui procure une forme ondulée laissant apparaître des échancrures 17 sur les bords 18 du boîtier. Cette forme particulière contribue à la raideur du boîtier par un moment d'inertie axial et longitudinal.

La fermeture du boîtier se réalise par assemblage d'un couvercle 40 et d'un joint 41 de la même forme. Ce couvercle 40 écrase le joint plat 41 au moyen d'une série de clips 30 qui sont disposés dans les échancrures. Ceux-ci facilitent une fermeture rapide, sans sur-épaisseur.

Cependant, des vis 41 disposées dans l'épaisseur sous l'échancrure permettent un assemblage conventionnel.

Il est tout à fait envisageable pour éviter de dévisser toutes les vis d'utiliser le principe de cavités oblongues en forme de boutonnière 43. Dans ce cas, les vis sont légèrement desserrées, le couvercle est placé sous les têtes de vis après glissement longitudinal, une fermeture rapide des vis permet l'assemblage et l'étanchéité.

Avantageusement le boîtier pourra être réalisé par la technique d'injection plastique. Son épaisseur est d'environ 30 à 40 mm (l'épaisseur du couvercle est d'environ 5mm), et la longueur de ce boîtier est d'environ 800 mm.

## Revendications

1. Système de piquage d'un câble, notamment de fibres optiques unitubulaire, comportant
- un câble en piquage comprenant des fils ou fibres dans une gaine incluant des porteurs, et
- un boîtier de piquage comprenant un support creux allongé, pour le raccordement d'un(e) ou de plusieurs fil(s) ou fibre(s) de ce câble en piquage respectivement à un(e) ou plusieurs fil(s) ou fibre(s) formant au moins un autre câble dit câble de dérivation, **caractérisé en ce que** ledit support creux (3) est adapté au passage du câble en piquage tendu (C) entre ses deux extrémités, ledit câble en piquage étant découpé axialement en douze demi-gaines sans destruction des porteurs, ledit boîtier comportant un écarteur (2) pour maintenir écartées à l'intérieur du support creux (3) les deux demi-gaines (G) résultant de ladite découpe, afin de libérer ainsi les fibres (F) du câble en piquage.

2. Système de piquage selon la revendication 1, **caractérisé en ce que** le support creux (3) comporte plusieurs alvéoles (il) successives pour le logement des sur-longueurs des fibres (FR,FB) des câbles de dérivation.

3. Système de piquage selon la revendication 1 ou 2, **caractérisé en ce que** l'écarteur (2) est formé de deux tiges (20) parallèles solidaires de rondelles (21) de fixation au boîtier.

4. Système de piquage selon l'une quelconque des revendications précédentes, **caractérisé en ce que** le support creux (3) est formé par une base de forme générale parallélépipédique dans laquelle a été prévu un canal (10) de dimensions appropriées pour recevoir le câble en piquage avec l'écarteur.

5. Système de piquage selon la revendication 4, **caractérisé en ce qu'**il comporte une ou plusieurs plaquette (13) support d'épissures placées au-dessus du canal le long de ce dernier.

6. Système de piquage selon la revendication 4, selon lequel la base (3) est fermée par un couvercle (40) **caractérisé en ce que** les bords longitudinaux (18) de la base (3) ont une forme ondulée correspondant aux formes des alvéoles (11) de manière à recevoir des clips (30) afin que le couvercle exerce un pression sur un joint (41) placé entre ledit couvercle et la base.

7. Système de piquage selon la revendication 6 **caractérisé en ce que** le couvercle (40) est assemblé par des vis et comporte des boutonnières (43) pour ouverture rapide dudit boîtier.

8. Procédé de piquage pour dériver un(e) ou plusieurs fil(s) ou fibre(s) d'un câble en piquage afin de les raccorder respectivement à un(e) ou plusieurs fil(s) ou fibre(s) formant au moins un autre câble dit câble de dérivation, ledit câble en piquage comprenant des fils ou fibres dans une gaine incluant des porteurs, **caractérisé en ce qu'**il comprend
- une étape consistant à réaliser une découpe axiale de la gaine dudit câble en piquage (C), sans destruction des porteurs, en deux demi-gaines (G), et
- une étape consistant à faire passer le câble en piquage dans le support creux (3), de forme allongé, d'un boîtier de piquage équipé d'un écarteur (2), de sorte que les deux demi-gaines soient maintenues écartées à l'intérieur du support creux par ledit écarteur, afin de libérer les fils où fibres (F) du câble en piquage.

## Claims

1. System for tapping a cable, especially a loose-tube fibre-optic cable, comprising:
- a tap-off cable, comprising wires or fibres in a sheath that includes strength members; and
- a tap-off case comprising an elongate hollow support, for the tap-off connection of one or more wires or fibres of this cable to one or more wires or fibres, respectively, which form at least one other cable, called a branch cable, **characterized in that** said hollow support (3) is suitable for the passage of the tight tap-off cable (C) between its two ends, said tap-off cable being cut axially into two half-sheaths without destroying the strength members, and said case including a spacer (2) for keeping the two resulting half-sheaths (G) apart inside the hollow support (3) so as in this way to free the fibres (F) of the tap-off cable.

2. Tapping system according to Claim 1, **characterized in that** the hollow support (3) comprises several successive cells (11) for housing the additional lengths of fibres (FR, FB) of the branch cables.

3. Tapping system according to Claim 1 or 2, **characterized in that** the spacer (2) is formed from two parallel rods (20) fastened to washers (21) for attachment to the case.

4. Tapping system according to any one of the preceding claims, **characterized in that** the hollow support (3) is formed by a base of general parallelepipedal shape in which a channel (10) has been provided with dimensions suitable for housing the tap-off cable with the spacer.

5. Tapping system according to Claim 4, **characterized in that** it includes one or more splice support plates (13) placed above the channel along the latter.

6. Tapping system according to Claim 4, in which the base (3) is closed by a cover (40), **characterized in that** the longitudinal edges (18) of the base (3) have a corrugated shape corresponding to the shapes of the cells (11) so as to house clips (30) in order for the cover to exert pressure on a gasket (41) placed between said cover and the base.

7. Tapping system according to Claim 6, **characterized in that** the cover (40) is assembled by screws and it includes button holes (43) in order for said case to be rapidly opened.

8. Tapping method for branching off one or more wires or fibres from a tapping cable so as to connect them respectively to one or more wires or fibres forming at least one other cable, called the branch cable, said tapping cable comprising wires or fibres in a sheath that includes strength members, **characterized in that** it comprises:
- a step consisting in cutting the sheath of said tapping cable (C) axially into two half-sheaths (G), without destroying the strength members; and
- a step consisting in passing the tapping cable into the hollow support (3), of elongate shape, of a tapping case equipped with a spacer (2) in such a way that the two half-sheaths are kept apart inside the hollow support by said spacer, so as to free the wires or fibres (F) of the tapping cable.

## Patentansprüche

1. System zum Aufspalten eines Kabels, insbesondere aus Einzelhüllen-Lichtleitfasern, das umfasst:
- ein aufgespaltetes Kabel, das in einer Abschirmung, die Träger enthält, Drähte oder Fasern aufweist, und
- ein Aufspaltgehäuse, das eine lang gestreckte hohle Unterstützung aufweist, um einen oder mehrere Drähte oder eine oder mehrere Fasern dieses aufgespalteten Kabels mit einem oder mehreren Drähten bzw. einer oder mehreren Fasern zu verbinden, die wenigstens ein weiteres Kabel, das Abzweigkabel genannt wird, bilden, **dadurch gekennzeichnet, dass** die hohle Unterstützung (3) so beschaffen ist, dass das gespannte aufgespaltete Kabel (C) zwischen seinen zwei Enden verlaufen kann, wobei das aufgespaltete Kabel ohne Zerstörung der Träger axial in zwei Halbabschirmungen zerschnitten ist, wobei das Gehäuse einen Abstandshalter (2) aufweist, um die zwei Halbabschirmungen (G), die sich durch das Zerschneiden ergeben, innerhalb der hohlen Unterstützung (3) beabstandet zu halten, um **dadurch** die Fasern (F) des aufgespalteten Kabels freizugeben.

2. Aufspaltsystem nach Anspruch 1, **dadurch gekennzeichnet, dass** die hohle Unterstützung (3) mehrere aufeinander folgende Waben (11) aufweist, um die Überlängen der Fasern (FR, FB) der Abzweigkabel aufzunehmen.

3. Aufspaltsystem nach Anspruch 1 oder 2, **dadurch gekennzeichnet, dass** der Abstandshalter (2) aus zwei parallelen Stiften (20) gebildet ist, die mit Unterlegscheiben (21) für die Befestigung am Gehäuse fest verbunden sind.

4. Aufspaltsystem nach einem der vorhergehenden Ansprüche, **dadurch gekennzeichnet, dass** die hohle Unterstützung (3) durch eine Grundfläche mit im Allgemeinen parallelepipedischer Form gebildet ist, in der ein Kanal (10) mit Abmessungen vorgesehen worden ist, die geeignet sind, das aufgespaltete Kabel mit dem Abstandshalter aufzunehmen.

5. Aufspaltsystem nach Anspruch 4, **dadurch gekennzeichnet, dass** es ein oder mehrere Spleißunterstützungsplättchen (13) aufweist, die über dem Kanal längs dieses Letzteren angeordnet sind.

6. Aufspaltsystem nach Anspruch 4, bei dem die Grundfläche (3) durch einen Deckel (40) verschlossen ist, **dadurch gekennzeichnet, dass** die longitudinalen Ränder (18) der Grundfläche (3) eine wellige Form haben, die den Formen der Waben (11) entspricht, derart, dass Klemmelemente (30) aufgenommen werden, damit der Deckel auf eine Dichtung (41), die zwischen dem Deckel und der Grundfläche angeordnet ist, einen Druck ausübt.

7. Aufspaltsystem nach Anspruch 6, **dadurch gekennzeichnet, dass** der Deckel (40) durch Schrauben angebracht ist und längliche Aussparungen (43) für ein schnelles Öffnen des Gehäuses aufweist.

8. Aufspaltverfahren zum Abzweigen eines oder mehrerer Drähte oder einer oder mehrerer Fasern eines aufgespalteten Kabels, um sie mit einem oder mehreren Drähten bzw. einer oder mehreren Fasern zu verbinden, die wenigstens ein weiteres Kabel, das Abzweigkabel genannt wird, bilden, wobei das aufgespaltete Kabel in einer Abschirmung, die Träger enthält, Drähte oder Fasern aufweist, **dadurch gekennzeichnet, dass** es umfasst:
- einen Schritt, der darin besteht, ein axiales Zerschneiden der Abschirmung des aufgespalteten Kabels (C) in zwei Halbabschirmungen (G) ohne Zerstörung der Träger auszuführen, und
- einen Schritt, der darin besteht, das aufgespaltete Kabel in die hohle Unterstützung (3) mit lang gestreckter Form eines mit einem Abstandshalter (2) versehenen Aufspaltgehäuses einzuführen, derart, dass die zwei Halbabschirmungen in der hohlen Unterstützung durch den Abstandshalter beabstandet gehalten werden, um die Drähte oder Fasern (F) des aufgespalteten Kabels freizugeben.
